# EUROPÄISCHE PATENTSCHRIFT

(11) **EP 2 122 813 B1**
(45) Veröffentlichungstag und Bekanntmachung des Hinweises auf die Patenterteilung: **13.03.2013**
(21) Anmeldenummer: 07703934.5
(22) Anmeldetag: 17.01.2007
(51) Int. Cl.: H02M 1/36, H02M 1/32

(54) **SCHALTUNGSANORDNUNG UND VERFAHREN ZUR ERHÖHUNG DER SICHERHEIT EINES SCHALTNETZTEILS**
CIRCUIT ARRANGEMENT AND METHOD FOR INCREASING THE SAFETY OF A SWITCHING POWER SUPPLY
CIRCUIT ÉLECTRIQUE ET PROCÉDÉ POUR AUGMENTER LA SÉCURITÉ D'UNE ALIMENTATION DE PUISSANCE À DÉCOUPAGE

(43) Veröffentlichungstag der Anmeldung: 25.11.2009
(73) Patentinhaber: OSRAM GmbH, 81543 München (DE)
(72) Erfinder: SKATULLA, Marcus, 83374 Traunwalchen (DE)
(86) Internationale Anmeldenummer: PCT/EP2007/050434
(87) Internationale Veröffentlichungsnummer: WO 2008/086891

(56) Entgegenhaltungen:
- WO-A-82/00070
- GB-A- 2 294 822
- JP-A- 55 066 290
- JP-A- 60 013 475
- JP-A- 2005 269 883
- US-A1- 2005 052 886
- US-B1- 6 424 125

## Beschreibung

### Technisches Gebiet

Die Erfindung betrifft elektronische Betriebsgeräte, die an Netzspannung betrieben werden. Diese Geräte verfügen normalerweise über einen Netzeingangsfilter, der aus Kondensatoren und induktiven Bauteilen besteht. Üblicherweise sind in diesem Netzfilter auch sogenannte X-Kondensatoren enthalten, das sind Kondensatoren die zwischen den Wechselstromanschlüssen liegen.

Wenn ein Betriebsgerät von der Netzspannung getrennt wird, behalten diese Kondensatoren für eine gewisse Zeit ihre Spannung, somit besteht für einen Anwender, z.B. einen Elektriker, die Gefahr eines Stromschlags beim Berühren der betriebsgeräteseitigen Netzklemmen. Daher gibt es in einigen Ländern eine Vorschrift, die vorschreibt dass die Spannung an den betriebsgeräteseitigen Netzklemmen innerhalb kurzer Zeit auf eine ungefährliche Spannung abgesunken sein muss.

### Stand der Technik

Um diese Vorschrift einzuhalten gibt es im Stand der Technik 2 verschiedene Ansätze. Der eine Ansatz besteht darin die X-Kondensatoren so klein zu wählen, dass diese mit dem geringen Stromverbrauch im Stand By des Gerätes, d.h. wenn die Lampen ausgeschaltet sind, in der vorgeschriebenen Zeit entladen werden.

Die andere Möglichkeit besteht darin, den an sich geringen Stand By Verbrauch eines modernen elektronischen Betriebsgerätes künstlich zu erhöhen um die Kondensatoren in der vorgeschriebenen Zeit zu entladen.

Weiterhin ist im Stand der Technik bekannt, beim Trennen von der Netzspannung für kurze Zeit einen Verbraucher einzuschalten, um die Ladung der Kondensatoren zu neutralisieren.

Aus den Schriften JP 600 13 475 A1, US 6424 125 B1, GB 2 294 (22 A, WO 82 / 00070 und JP 2005 26 9883 A ist z.B. bekannt, bei Abfall der Netzspannung einen Widerstand parallel zu einem Glättungskondensator zu schalten, um diesen zu entladen.

Aus der US 2005 / 0052886 A1 ist bekannt, Widerstände fest zu X- oder Glättungskondensatoren zu schalten, um diese zu entladen. Dies hat aber den Nachteil erhöhter Verluste.

Aus der JP 550 66 290 A ist bekannt, einen als Last an eine Drehstrombrücke angeschlossenen Motor zum Entladen der Glättungskondensatoren zu verwenden, indem zwei Transistoren der Drehstrombrücke eingeschaltet werden.

Die Ausführungsformen besitzen aber Nachteile. Wenn die Kondensatoren zu klein gewählt werden, können sie ihrer eigentlichen Aufgabe, Netzstörungen und Hochspannungspulse auszufiltern nicht mehr gerecht werden. Die Folge sind Ausfälle der elektronischen Betriebsgeräte aufgrund von Überspannungen im Stromnetz. Auch können unter Umständen Störungen, die vom elektronischen Betriebsgerät verursacht werden nicht mehr genügend gefiltert werden, so dass geltende EMV-Vorschriften (EMV=elektromagnetische Verträglichkeit) nicht mehr eingehalten werden können.

Werden die Kondensatoren ausreichend groß gewählt, so muss der an sich sehr geringe Stromverbrauch des Betriebsgerätes im Stand By künstlich erhöht werden, was sich negativ auf den Gesamtstromverbrauch und letztlich auch auf die Umwelt auswirkt.

Als zusätzliches Problem erweist sich noch ein Stützkondensator hinter dem Gleichrichter, der bei sehr vielen Betriebsgeräten vorgesehen ist und die gleichgerichtete Wechselspannung glätten soll. Um diese Aufgabe zu erfüllen wird der Kondensator sehr groß dimensioniert. Da er den X-Kondensatoren über den Gleichrichter parallelgeschaltet ist, muss er durch den Stand By Verbrauch gleichzeitig mit den X-Kondensatoren entladen werden, um die vorgeschriebene Norm einhalten zu können.

Die Schalter zum parallel schalten des Widerstandes sowie der Widerstand bedeuten zusätzlichen Aufwand, der Kosten verursacht, da dieser Schalter ja auch angesteuert werden muss.

### Aufgabe

Es ist daher Aufgabe der Erfindung, eine Schaltungsanordnung und ein Verfahren anzugeben, bei dem die X-Kondensatoren genügend groß gewählt werden können ohne den Stand By Verbrauch des Betriebsgerätes dauerhaft erhöhen zu müssen, und ohne zusätzliche Kosten zu verursachen.

### Darstellung der Erfindung

Diese Aufgabe wird gelöst durch eine Schaltungsanordnung mit den Merkmalen des Patentanspruchs 1 und ein Verfahren mit den Merkmalen des Patentanspruchs 7. Bei dem erfindungsgemäßen Betriebsgerät handelt es sich um ein Gerät, dass permanent mit der Netzspannung verbunden ist und über eine Steuerschnittstelle die Lampe oder die Lampen ein- und ausschaltet. Sind die Lampen ausgeschaltet befindet sich das Gerät im sogenannten Stand By. In diesem Zustand wird die Spannung an den Netzeingangsklemmen permanent oder periodisch überwacht. Wird das Abklemmen der Netzspannung detektiert, so wird ein geeigneter Verbraucher für eine definierte Zeitspanne konstant oder getaktet eingeschaltet. Dabei sind die Verlustleistung des Verbrauchers und die Länge der definierten Zeitspanne so abgestimmt, dass die in den Kondensatoren gespeicherte Energie verbraucht wird, und die Spannung, die an den Netzeingangsklemmen des elektronischen Betriebsgeräts anliegt schnell abgebaut wird. Insbesondere sind die Verlustleistung des Verbrauchers und die Länge der definierten Zeitspanne so bemessen, dass die Spannung, die an den Netzeingangsklemmen des elektronischen Betriebsgeräts anliegt so schnell abgebaut wird dass die verschiedenen geltenden Sicherheitsvorschriften eingehalten werden.

Durch diese Schaltungsanordnung erhält man die Vorteile, die X-Kondensatoren so groß wählen zu können wie es notwendig ist, und gleichzeitig die Stromaufnahme im Stand By Zustand des Betriebsgerätes so klein wie möglich halten zu können.

### Kurze Beschreibung der Zeichnung(en)

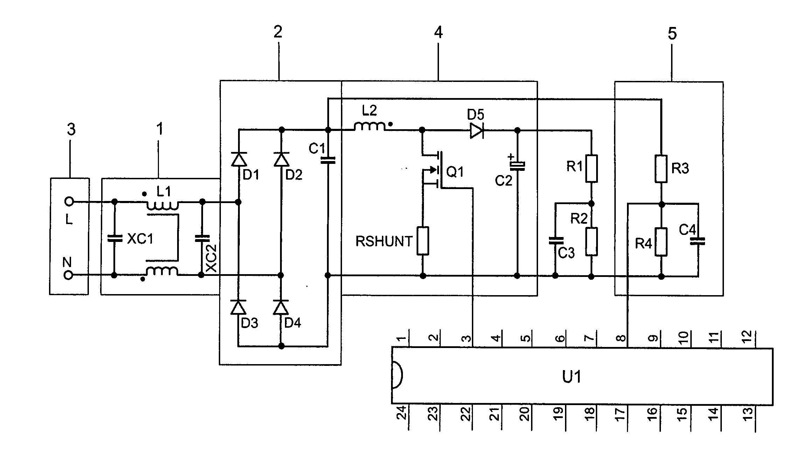

- Fig. 1: Schaltbild der erfindungsgemäßen Schaltungsanordnung

### Bevorzugte Ausführung der Erfindung

Fig. 1 zeigt ein Schaltbild der erfindungsgemäßen Schaltungsanordnung, mit Netzeingangsklemmen (3), einem Netzeingangsfilter (1), einem Gleichrichterteil mit Filterkondensator (2), sowie einem Gleichspannungswandler (4).

Der Netzeingangsfilter (1) besteht aus zwei X-Kondensatoren (XC1, XC2) und einer Drossel. Nach dem Netzeingangsfilter (1) kommt ein Gleichrichterteil (2) mit nachfolgendem Glättungskondensator (C1). Die geglättete Spannung wird von einem Gleichspannungswandler (4), der einen Schalttransistor (Q1) enthält aufbereitet. Zur Detektion der Netzspannung dient ein Spannungsteiler (5), der die Spannung am Glättungskondensator (C1) abgreift. Alternativ kann die Spannung aber auch an einem der X-Kondensatoren (XC1, XC2) abgegriffen werden. Der Ausgang des Spannungsteilers ist an einen Eingang eines vorhandenen Mikrocontrollers (U1) geschaltet. Ein Abschalten der Netzspannung kann durch einen Vergleich mit einem Schwellwert, der unterschritten werden muss detektiert werden. Alternativ kann auch die Größe des Spannungsabfalls (dU/dT) detektiert werden. Die Detektion des Abschaltens der Netzspannung erfolgt dann, wenn der Spannungsabfall ein bestimmtes Maß übersteigt. Es können aber auch beide Verfahren miteinander verknüpft werden um die Geschwindigkeit und die Sicherheit der Erkennung zu erhöhen. Eine dritte Möglichkeit besteht darin zu erkennen, ob grundsätzlich eine Wechselspannung an den Klemmen anliegt oder nicht. Da dies unabhängig vom Stand By Verbrauch und vom Ladezustand der Kondensatoren erfolgen kann, ist diese Methode vor allem bei sehr geringem Stand By Verbrauch des elektronischen Betriebsgerätes sinnvoll, und kann die Geschwindigkeit und die Sicherheit der Erkennung erhöhen.

Da diese Detektion vor allem im Stand By Betrieb erfolgt, kann sie leicht durch den schon vorhandenen Mikrocontroller (U1) übernommen werden.

Ist ein Netzaus erkannt, wird der Spannungswandlertransistor Q1 für eine sehr kurze Zeit (wenige ms) eingeschaltet, um die in den Kondensatoren gespeicherte Energie schnell zu verbrauchen. Es besteht die Möglichkeit den Spannungswandler konstant eingeschaltet zu lassen. Er kann aber auch getaktet werden, um den resultierenden Strom nicht zu groß werden zu lassen. Auf diese Weise können in der Schaltung schon vorhandene Komponenten verwendet werden, so dass keine zusätzlichen Kosten entstehen. Auch ein Spannungsteilerabgriff am Glättungskondensator C1 ist in vielen Betriebsgeräten schon vorhanden, so dass auch hier keine zusätzlichen Kosten verursacht werden.

Es wäre aber auch denkbar einen geeigneten Verbraucher direkt parallel zu den X-Kondensatoren zu schalten. Dies hätte den Vorteil, dass der hinter dem Gleichrichter liegende Glättungskondensator nicht mit entladen werden muss, da er die Klemmenspannung nicht beeinflusst.

## Patentansprüche

1. Schaltungsanordnung zur Erhöhung der Sicherheit eines elektronischen Betriebsgerätes, mit Netzeingangsklemmen (3), einem Netzeingangsfilter (1) mit X-Kondensatoren (XC1, XC2), die parallel zu den Netzeingangsklemmen geschaltet sind, einem Gleichrichterteil (2) mit einem Vollwellengleichrichter (D1-D4) und einem Glättungskondensator (C1), der zwischen die Ausgangsklemmen des Vollwellengleichrichters (D1-D4) geschaltet ist, und einem an die Ausgangsklemmen des Gleichrichterteils angeschlossenen Gleichspannungswandler (4),
**dadurch gekennzeichnet, dass**
die Schaltungsanordnung so ausgebildet ist, dass bei Abklemmen der Netzspannung ein Verbraucher für eine definierte Zeitspanne eingeschaltet wird, wobei der Verbraucher und die Zeitspanne so abgestimmt sind, dass der Verbraucher die in den Kondensatoren (XC1, XC2, C1) gespeicherte Restenergie verbraucht, der Verbraucher der Gleichspannungswandlertransistor ist, die Spannung an den Netzeingangsklemmen (3) innerhalb einer bestimmten Zeit auf einen für Menschen ungefährlichen Wert abgebaut wird, dass die verschiedenen geltenden Sicherheitsvorschriften eingehalten werden, wobei das Abklemmen der Netzspannung durch Messen derselben und Vergleich mit einem Schwellwert detektiert wird, und/oder das Abklemmen der Netzspannung durch den Abfall der Netzspannung über einer definierten Zeitspanne (dU/dt) erkannt wird.

2. Schaltungsanordnung zur Erhöhung der Sicherheit eines elektronischen Betriebsgerätes nach Anspruch 1,
**dadurch gekennzeichnet, dass**
der Gleichspannungswandlertransistor getaktet eingeschaltet wird.

3. Schaltungsanordnung zur Erhöhung der Sicherheit eines elektronischen Betriebsgerätes nach Anspruch 1,
**dadurch gekennzeichnet, dass**
der Gleichspannungswandlertransistor konstant eingeschaltet wird.

4. Schaltungsanordnung zur Erhöhung der Sicherheit eines elektronischen Betriebsgerätes nach einem der vorhergehenden Ansprüche,
**dadurch gekennzeichnet, dass**
die Netzspannung direkt an den Netzeingangsklemmen (3) detektiert wird.

5. Schaltungsanordnung zur Erhöhung der Sicherheit eines elektronischen Betriebsgerätes nach einem der Ansprüche 1 bis 3,
**dadurch gekennzeichnet, dass**
die Netzspannung am Glättungskondensator (C1) hinter dem Gleichrichter mittels eines Spannungsteilers (5) detektiert wird.

6. Schaltungsanordnung zur Erhöhung der Sicherheit eines elektronischen Betriebsgerätes nach Anspruch 4,
**dadurch gekennzeichnet, dass**
das Abklemmen der Netzspannung über eine Wechselspannungserkennung erkannt wird.

7. Verfahren zum Betreiben einer Schaltungsanordnung zur Erhöhung der Sicherheit eines elektronischen Betriebsgerätes, mit Netzeingangsklemmen (3), einem Netzeingangsfilter (1) mit X-Kondensatoren (XC1, XC2), die parallel zu den Netzeingangsklemmen geschaltet sind, einem Gleichrichterteil (2) mit einem Vollwellengleichrichter (D1-D4) und einem Glättungskondensator (C1), der zwischen die Ausgangsklemmen des Vollwellengleichrichters (D1-D4) geschaltet ist, und einem an die Ausgangsklemmen des Gleichrichterteils angeschlossenen Gleichspannungswandler (4), **gekennzeichnet durch** folgende Schritte:
- Messen der Netzeingangsspannung an den Netzeingangsklemmen (3) oder am Glättungskondensator (C1);
- Detektieren eines Abklemmens der Netzspannung durch Unterschreiten eines Netzspannungsschwellwertes und/oder **durch** Messen des Abfalls der Netzspannung über der Zeit (dU/dt) und Vergleichen mit einem Referenzwert;
- Bei Detektion eines Abklemmens der Netzspannung Einschalten eines Verbrauchers für eine definierte Zeitspanne, wobei der Verbraucher der Gleichspannungswandlertransistor des Gleichspannungswandlers der Schaltungsanordnung ist, wobei der Verbraucher und die Zeitspanne so bemessen sind, dass die Restenergie in den Kondensatoren (XC1, XC2, C1) verbraucht wird, und die Spannung an den Netzeingangsklemmen innerhalb einer bestimmten Zeit auf einen für Menschen ungefährlichen Wert abgebaut wird, dass die verschiedenen geltenden Sicherheitsvorschriften eingehalten werden.

## Claims

1. Circuit arrangement for increasing the safety of an electronic operating device, with mains input terminals (3), a mains input filter (1) with X capacitors (XC1, XC2), which are connected in parallel with the mains input terminals, a rectifier part (2) with a full-wave rectifier (D1 - D4) and a smoothing capacitor (C1), which is connected between the output terminals of the full-wave rectifier (D1 - D4), and a DC - DC voltage converter (4), which is connected to the output terminals of the rectifier part,
**characterized in that**
the circuit arrangement is designed in such a way that,
when the mains voltage is disconnected from the terminals, a load is switched on for a defined time span, the load and the time span being matched in such a way that the load consumes the residual energy which is stored in the capacitors (XC1, XC2, C1), the load being the DC - DC voltage converter transistor, the voltage across the mains input terminals (3) being reduced to a value which is unhazardous for humans within a particular period of time so that the different current safety regulations are complied with, the disconnection of the mains voltage from the terminals being detected by measurement of said mains voltage and comparison with a threshold value and/or the disconnection of the mains voltage from the terminals being identified by the drop in the mains voltage over a defined time span (dU/dt).

2. Circuit arrangement for increasing the safety of an electronic operating device according to Claim 1,
**characterized in that**
the DC - DC voltage converter transistor is switched on in clocked fashion.

3. Circuit arrangement for increasing the safety of an electronic operating device according to Claim 1,
**characterized in that**
the DC - DC voltage converter transistor is switched on constantly.

4. Circuit arrangement for increasing the safety of an electronic operating device according to one of the preceding claims,
**characterized in that**
the mains voltage is detected directly at the mains input terminals (3).

5. Circuit arrangement for increasing the safety of an electronic operating device according to one of Claims 1 to 3,
**characterized in that**
the mains voltage is detected at the smoothing capacitor (C1) downstream of the rectifier by means of a voltage divider (5).

6. Circuit arrangement for increasing the safety of an electronic operating device according to Claim 4,
**characterized in that**
the disconnection of the mains voltage from the terminals is identified via AC voltage detection.

7. Method for operating a circuit arrangement for increasing the safety of an electronic operating device, having mains input terminals (3), a mains input filter (1) with X capacitors (XC1, XC2) connected in parallel with the mains input terminals, a rectifier part (2) with a full-wave rectifier (D1-D4) and a smoothing capacitor (C1) connected between the output terminals of the full-wave rectifier (D1-D4), and a DC - DC voltage converter (4) connected to the output terminals of the rectifier part,
**characterized by** the following steps:
- measurement of the mains input voltage at the mains input terminals (3) or at the smoothing capacitor (C1);
- detection of a disconnection of the mains voltage from the terminals by a mains voltage threshold value being undershot and/or by measurement of the drop in the mains voltage over the time (dU/dt) and comparison with a reference value;
- in the event of detection of a disconnection of the mains voltage from the terminals, switching-on of a load for a defined time span, the load being the DC - DC voltage converter transistor of the DC - DC voltage converter of the circuit arrangement, the load and the time span being dimensioned in such a way that the residual energy in the capacitors (XC1, XC2, C1) is consumed, and the voltage across the mains input terminals being reduced to a value which is unhazardous for humans within a particular period of time so that the different current safety regulations are complied with.

## Revendications

1. Circuit électrique pour augmenter la sécurité d'un appareil fonctionnel électronique, avec des bornes secteur (3), un filtre secteur (1) avec des condensateurs X (XC1, XC2) qui sont montés en parallèle avec les bornes secteur, un élément redresseur (2) avec un redresseur pleine onde (D1-D4) et un condensateur de lissage (C1) qui est monté entre les bornes de sortie du redresseur pleine onde (D1-D4), et un convertisseur de tension continue (4) raccordé aux bornes de sortie de l'élément redresseur, **caractérisé en ce que** le circuit électrique est réalisé de manière telle que, à la coupure de la tension de réseau, un consommateur est enclenché pour un laps de temps défini, le consommateur et le laps de temps étant accordés de manière telle que le consommateur consomme l'énergie résiduelle stockée dans les condensateurs (XC1, XC2, C1), le consommateur étant le transistor du convertisseur de tension continue, la tension au niveau des bornes secteur (3) étant ramenée, dans les limites d'une durée déterminée, à une valeur non dangereuse pour l'homme de sorte que les différentes prescriptions applicables en matière de sécurité sont respectées, la coupure de la tension de réseau étant détectée par mesure de celle-ci et comparaison avec une valeur seuil et/ou la coupure de la tension de réseau étant reconnue du fait de la chute de la tension de réseau sur un laps de temps défini (dU/dt).

2. Circuit électrique pour augmenter la sécurité d'un appareil fonctionnel électronique selon la revendication 1, **caractérisé en ce que** le transistor du convertisseur de tension continue est enclenché de manière cadencée.

3. Circuit électrique pour augmenter la sécurité d'un appareil fonctionnel électronique selon la revendication 1, **caractérisé en ce que** le transistor du convertisseur de tension continue est enclenché de manière constante.

4. Circuit électrique pour augmenter la sécurité d'un appareil fonctionnel électronique selon l'une des revendications précédentes, **caractérisé en ce que** la tension de réseau est détectée directement au niveau des bornes secteur (3).

5. Circuit électrique pour augmenter la sécurité d'un appareil fonctionnel électronique selon l'une des revendications 1 à 3, **caractérisé en ce que** la tension de réseau est détectée au niveau du condensateur de lissage (C1) en aval du redresseur au moyen d'un séparateur de tension (5).

6. Circuit électrique pour augmenter la sécurité d'un appareil fonctionnel électronique selon la revendication 4, **caractérisé en ce que** la coupure de la tension de réseau est reconnue par l'intermédiaire d'une reconnaissance de tension alternative.

7. Procédé pour faire fonctionner un circuit électrique pour augmenter la sécurité d'un appareil fonctionnel électronique avec des bornes secteur (3), un filtre secteur (1) avec des condensateurs X (XC1, XC2) qui sont montés en parallèle avec les bornes secteur, un élément redresseur (2) avec un redresseur pleine onde (D1-D4) et un condensateur de lissage (C1) qui est monté entre les bornes de sortie du redresseur pleine onde (D1-D4), et un convertisseur de tension continue (4) raccordé aux bornes de sortie de l'élément redresseur, **caractérisé par** les étapes suivantes :
- mesure de la tension de réseau au niveau des bornes secteur (3) ou du condensateur de lissage (C1) ;
- détection d'une coupure de la tension de réseau par dépassement par le bas d'une valeur seuil de la tension de réseau et/ou par mesure de la chute de la tension de réseau sur le temps (dU/dt) et comparaison avec une valeur de référence ;
- à la détection d'une coupure de la tension de réseau, enclenchement d'un consommateur pour un laps de temps défini, le consommateur étant le transistor de convertisseur de tension continue du convertisseur de tension continue du circuit électrique, le consommateur et le laps de temps étant dimensionnés de manière telle que l'énergie résiduelle des condensateurs (XC1, XC2, C1) est consommée et la tension au niveau des bornes secteur étant ramenée, dans les limites d'une durée déterminée, à une valeur non dangereuse pour l'homme de sorte que les différentes prescriptions applicables en matière de sécurité sont respectées.
